# EUROPÄISCHE PATENTSCHRIFT

(11) **EP 3 660 233 B1**
(45) Veröffentlichungstag und Bekanntmachung des Hinweises auf die Patenterteilung: **25.05.2022**
(21) Anmeldenummer: 19210807.4
(22) Anmeldetag: 22.11.2019
(51) Int. Cl.: E03B 3/03, E03B 11/02, E02B 11/00, E03B 3/04, E03B 11/14, E03F 1/00

(54) **WASSERSPEICHERVORRICHTUNG FÜR EINE BEWÄSSERUNGSANLAGE VON NUTZFLÄCHEN UND BEWÄSSERUNGSVORRICHTUNG FÜR NUTZFLÄCHEN**
WATER STORAGE DEVICE FOR AN IRRIGATION SYSTEM OF USEFUL SURFACES AND IRRIGATION DEVICE FOR USEFUL SURFACES
DISPOSITIF D'ACCUMULATION D'EAU POUR UNE INSTALLATION D'IRRIGATION DE SURFACES UTILES ET DISPOSITIF D'IRRIGATION POUR SURFACES UTILES

(30) Priorität: 27.11.2018 DE 202018106734 U
(43) Veröffentlichungstag der Anmeldung: 03.06.2020
(73) Patentinhaber: Heitker, Philipp, 49809 Lingen (Ems) (DE)
(72) Erfinder: Heitker, Philipp, 49809 Lingen (Ems) (DE)
(74) Vertreter: Jabbusch, Matthias

(56) Entgegenhaltungen:
- CN-A- 103 733 955
- ES-A1- 2 320 304
- ES-A1- 2 438 447
- US-A1- 2011 114 748

## Beschreibung

Die Erfindung betrifft eine Wasserspeichervorrichtung für eine Bewässerungsanlage von Nutzflächen, insbesondere von landwirtschaftlich genutzten Nutzflächen, mit mindesten einem Wasserspeicher und mit mindestens einer Wasserzuführung. Weiterhin betrifft die Erfindung eine Bewässerungsvorrichtung für Nutzflächen mit einer erfindungsgemäßen Wasserspeichervorrichtung. Ferner betrifft die Erfindung ein Verfahren zur Bewässerung einer Nutzfläche.

Bewässerungsanlagen für Freiflächen, insbesondere für landwirtschaftlich genutzte Anbauflächen oder Sportflächen, sind insbesondere in Dürreperioden, beispielsweise in besonders trockenen Sommermonaten, für den Ernteertrag einer Anbaufläche von besonderer Bedeutung. Insbesondere bei Sandböden, die Niederschlagswasser nur geringfügig speichern können, ist es bei längeren Trockenperioden ohne Bewässerung kaum sinnvoll landwirtschaftlichen Anbau zu betreiben. Hinzu kommt, dass aufgebrachte Düngemittel ohne eine ausreichende Wasserzufuhr nicht von den angebauten Pflanzen aufgenommen werden können und somit auf der Nutzfläche verbleiben. Die nicht genutzten Düngemittel werden dann zu regenreicheren Jahreszeiten, beispielsweise im Winter, aus dem Boden ausgewaschen und gelangen ungenutzt in das Grundwasser oder die Vorfluter, wodurch dieses belastet wird.

Problematisch bei bekannten Beregnungsanlagen ist, dass diese zumeist mit Grundwasser betrieben werden, wobei die Grundwasserstände insbesondere in langen Trockenperioden mit hoher Hitze und geringem Niederschlag stark sinken können. Eine Grundwasserentnahme ist zudem vielerorts nicht genehmigungsfähig. Weiterhin können Wasserspeicher, beispielsweise Wassertanks, zum Einsatz kommen, in denen beispielsweise Leitungswasser, oder von versiegelten Flächen aufgefangenes Regenwasser bereitgehalten wird. Problematisch bei der Verwendung von Wassertanks ist, dass das gespeicherte Wasser regelmäßig nachgefüllt werden muss und gegebenenfalls zu der zu bewässernden Anbaufläche transportiert werden muss.

Beispielsweise ist aus der ES 2 438 447 A1 ein Bewässerungssystem für Pflanzkulturen, die hohes Wasservolumen erfordern, beschrieben. In dem Bewässerungswasserrückgewinnungssystem wird das Wasser durch Bodenschichten geleitet, gefiltert und in einen Graben geleitet, der sich auf einer Höhe unterhalb der Entwässerungsschicht befindet.

In der ES 2 320 304 A1 ist ein Rückgewinnungssystem und die Verwendung von Bewässerungswasser beschrieben. Das System umfasst eine Schicht aus Geotextil zum Filtern des Bewässerungswassers, um den Durchgang von Erde, Wurzeln und Verunreinigungen zu verhindern, wobei die Schicht aus Geotextilgewebe zwischen einer oberen Schicht zum Anbau, die aus sandigem Boden besteht, und einer Bodenschicht aus Drainagematerial angeordnet ist. Das Drainagematerial besteht aus Kies unterschiedlicher Körnung. Eine wasserdichte Plane, die unter der Drainageschicht angeordnet ist, weist eine Neigung auf, um Wasser durch Schwerkraft in einen Wasserableitungskanal, der mit einem unteren Ansaugtank verbunden ist, zu leiten. Der Ansaugtank weist eine Pumpe zum Pumpen des Wassers in die Bewässerungsrohre auf.

Zudem ist aus der US 2011/0114748 A1 ein System zur Rückgewinnung des Wassers einer Sprinkleranlage bekannt. Das System weist ein Drainagesystem auf, das Niederschlagswasser des Sprinklers sammelt und zu einem Sammelpunkt leitet. Durch eine Pumpe kann das Wasser der Sprinkleranlage zugeführt werden.

In der CN 103 733 955 A1 ist eine Pflanzgrube offenbart wobei der Boden und die Seitenwand der Pflanzgrube mit einer Sickerschutzschicht versehen sind. Die Pflanzgrube ist nacheinander mit einer feinen Sandschicht und einer kultivierten Bodenschicht gefüllt. Am Boden der feinen Sandschicht ist ein Wassersammelgraben angeordnet, wobei der Wassersammelgraben mit einer Wassersammelverbindung verbunden ist. Das System weist einen Wassersammelbrunnen auf, dem eine Wasserpumpe und ein mit der Wasserpumpe verbundenes Wasserauslassrohr angeordnet sind.

Der Erfindung liegt die Aufgabe zu Grunde, eine Wasserspeichervorrichtung für eine Bewässerungseinrichtung und ein Verfahren zur Bewässerung vorzuschlagen, bei denen nicht auf Wasser aus anderen Quellen zurückgegriffen werden muss, insbesondere soll eine ausreichend schnelle Wasserversorgung des Wasserspeichers für den Betrieb einer Bewässerungsanlage sichergestellt sein.

Die Lösung dieser Aufgabe erfolgt mit einer Wasserspeichervorrichtung mit den Merkmalen des Patentanspruchs 1 sowie mit einem Verfahren mit den Merkmalen des Patentanspruchs 10. Weiterbildungen und vorteilhafte Ausgestaltungen sind in den Unteransprüchen angegeben.

Bei einer Wasserspeichervorrichtung für eine Bewässerungsanlage von Freiflächen, insbesondere von landwirtschaftlich genutzten Nutzflächen, mit mindesten einem Wasserspeicher und mit mindestens einer Wasserzuführung, wobei der Wasserspeicher unterirdisch angeordnet ist, wobei die Wasserzuführung durch mindestens eine Wasserauffangvorrichtung ausgebildet ist, wobei die Wasserauffangvorrichtung unterirdisch angeordnet ist und zumindest abschnittsweise unterhalb der Freifläche angeordnet ist, wobei die Wasserauffangvorrichtung durch mindestens eine Auffangfläche ausgebildet ist, wobei die Auffangfläche durch eine wasserdichte Folienbahn ausgebildet ist und wobei die Auffangfläche mindestens eine Drainageableitung aufweist, ist erfindungswesentlich vorgesehen, dass die Drainageableitung durch Drainageplatten ausgebildet ist, wobei die Drainageplatten oberhalb der wasserdichten Folienbahn angeordnet sind. Bei Nutzflächen kann es sich beispielsweise um landwirtschaftlich genutzte Flächen, um Sportanlagen oder Ähnliches handeln. Eine Wasserspeichervorrichtung für eine Bewässerungseinrichtung von Freiflächen weist einen Wasserspeicher und eine Wasserzuführung auf. Mittels der Wasserspeichervorrichtung kann ein Regenwasservorrat angelegt und für eine spätere Verwendung bereitgehalten werden. Bei der Wasserspeichervorrichtung kann es sich vorzugsweise um eine Anordnung von Rigolenkörpern, aber auch beispielsweise um einen Wassertank, oder Ähnliches handeln. Der Wasserspeicher ist unterirdisch, insbesondere unterhalb der zu bewässernden Freifläche, angeordnet. Somit sind durch die Anordnung des Wasserspeichers keinerlei räumliche Einschränkungen der Nutzfläche gegeben. Insbesondere wird die Anbaufläche für landwirtschaftliche Produkte nicht durch den Wasserspeicher eingeschränkt.

Dem Wasserspeicher ist mindestens eine Wasserzuführung zugeordnet. Die Wasserzuführung ist als eine Wasserauffangvorrichtung zum Auffangen von sich auf der zu bewässernden Freifläche niederschlagenden Regenmengen ausgebildet. Hierzu ist die Wasserauffangvorrichtung zumindest abschnittsweise, vorzugsweise vollständig, unterhalb der zu bewässernden Freifläche angeordnet. Bei den Wasserauffangvorrichtungen handelt es sich um wasserundurchlässige Auffangflächen. die durch Folienbahnen gebildet sind.

Durch die Wasserauffangvorrichtungen wird der Niederschlag, der in regenreichen Zeiten auf die Freifläche fällt und dort versickert, aufgefangen und die aufgefangenen Niederschlagsmengen werden dem Wasserspeicher zugeführt. Hierzu können die Wasserauffangvorrichtung sowie der Wasserspeicher beispielsweise mittels einer Zuleitung miteinander verbunden sein. Hierbei kann die Zuleitung beispielsweise durch einen direkten Anschluss der Wasserzuführung an den Wasserspeicher ausgebildet sein. Durch die unterirdische Anordnung des Wasserspeichers ist das im Wasserspeicher gespeicherte Wasservolumen durch die Bodenschicht gefiltert und gegen Verdunstung und gegen Verunreinigungen, beispielsweise aus der Umgebungsluft, geschützt. Zudem kann durch die Anordnung unterhalb der Nutzfläche die auf der Nutzfläche anfallende Regenwassermenge zu einem späteren Zeitpunkt, beispielsweise während einer Dürreperiode, zur Bewässerung genutzt werden. Somit ist ein natürlicher Wasserkreislauf von Niederschlag, Versickerung, Speicherung, Bewässerung und erneuter Versickerung bzw. Ableitung gegeben, ohne dass auf weitere Wasserressourcen zurückgegriffen werden muss. Ein besonders ressourcenschonendes Bewässerungssystem ist somit ermöglicht. Mindestens eine Wasserauffangvorrichtung zur Wasserversorgung des Wasserspeichers ist durch eine unterirdisch angeordnete Wasserauffangfläche ausgebildet. Die Wasserauffangflächen sind hierbei im wasserdicht ausgebildet und schließen an den Wasserspeicher an. Auf die Freifläche fallender Niederschlag versickert im Boden und wird von den Wasserauffangflächen aufgehalten. Von den Wasserauffangflächen gelangt das Wasser in den Wasserspeicher, indem es zur späteren Verwendung gespeichert werden kann. Durch die Auffangflächen ist auf einfache Art und Weise eine Möglichkeit geschaffen versickerndes Wasser aufzufangen und einem Wasserspeicher zuzuführen.

Die Auffangflächen, die der Wasserzuführung des Wasserspeichers dienen, sind als Folienbahnen ausgebildet. Folienbahnen werden hierbei in das Erdreich unterhalb der zu bewässernden Nutzfläche eingebracht und bilden für das Sickerwasser eine wasserundurchlässige Barriere. Über die Folienbahnen wird das versickerte Wasser dem Wasserspeicher zugeführt. Zum Einbringen der Folienbahnen in das Erdreich ist es lediglich notwendig, das Erdreich abschnittsweise aufzugraben, sodass die Folienbahnen abschnittsweise verlegt werden können. Hierdurch ist eine besonders einfache und kostengünstige Möglichkeit der Einbringung der Wasserauffangfläche in das Erdreich gegeben.

Die Auffangflächen weisen Drainageableitungen, die durch Drainageplatten ausgebildet sind, auf, durch die unterirdisch das versickernde Wasser dem Wasserspeicher zügig zugeführt wird. Die Drainageplatten sind oberhalb der Folienbahnen angeordnet, so dass die Folienbahnen einen wasserdichten Boden der Drainageplatten bilden.

Hierdurch ist eine kostengünstige Ausführungsform der Wasserzuführung gegeben, da es sich bei Drainageplatten um kommerziell verfügbare Bauteile handelt.

In einer Ausführungsform der Erfindung weist die Wasserauffangvorrichtung ferner mindestens ein Drainagerohr auf. Durch in das Erdreich eingebrachte Drainagerohre kann die auf der Nutzfläche anfallende Wassermenge dem Wasserspeicher zugeführt werden. Bei den Drainagerohren handelt es sich um Standardbauteile, die kostengünstig kommerziell verfügbar sind, sodass eine kostengünstige Möglichkeit der Bereitstellung einer Wasserauffangvorrichtung besteht.

In einer Weiterbildung der Erfindung weist mindestens eine Wasserauffangvorrichtung ein Gefälle in Richtung des Wasserspeichers auf. Die Wasserauffangvorrichtungen, weisen ein Gefälle in Richtung des Wasserspeichers auf. Beispielsweise kann der Wasserspeicher den tiefsten Punkt der Wasserspeichervorrichtung darstellen. Durch das Gefälle der Auffangvorrichtungen, ist eine rasche und vollständige Zuführung des aufgefangenen Niederschlagswassers zu dem Wasserspeicher gegeben. Beispielsweise kann der Wasserspeicher im Wesentlichen quaderförmig ausgebildet sein und die Folienbahnen können an den oberen Rand des Wasserspeichers anschließen, so dass das aufgefangene Wasser durch das Gefälle der Folienbahnen über den Rand in den Wasserspeicher fließen kann. In einer Ausführungsform der Erfindung weist der Wasserspeicher wasserundurchlässige Seitenwände und einen wasserundurchlässigen Boden auf. Hierdurch ist eine sichere Speicherung des aufzunehmenden Wassers ermöglicht, ohne dass das Wasser durch die Seitenwände bzw. den Boden im Erdreich versickert. Zudem ist das gespeicherte Wasser gegen Verunreinigungen oder das Eindringen von Erdreich geschützt.

In einer Ausführungsform der Erfindung ist der Wasserspeicher aus Rigolenkörpern aufgebaut. Der Wasserspeicher ist vorzugsweise quaderförmig ausgebildet und unterirdisch, unterhalb der zu bewässernden Nutzfläche angeordnet. Der Wasserspeicher kann insbesondere durch eine Anordnung von Rigolenkörpern, insbesondere von Regenwasserspeicherrigolen ausgebildet sein. Durch die Anordnung mehrerer Rigolenkörper ist eine individuelle Anpassung der Größe, insbesondere der Länge, der Breite, der Tiefe sowie des Volumens des Regenwasserspeichers an die örtlichen Gegebenheiten und das gewünschte Volumen ermöglicht.

In einer Ausführungsform der Erfindung schließt mindestens eine Wasserauffangvorrichtung an mindestens eine Seite des Wasserspeichers an. Eine Wasserspeichervorrichtung kann mindestens eine, vorzugsweise mehrere Wasserauffangvorrichtungen, d.h. Auffangflächen, aufweisen, die an mindestens eine Seite, vorzugsweise an mehrere Seiten an den Wasserspeicher angrenzen können. Beispielsweise kann der Wasserspeicher im Wesentlichen quaderförmig ausgebildet sein und somit eine im Wesentlichen rechteckige Grundfläche aufweisen. Hierbei kann beispielsweise die Oberseite, also die der Erdoberfläche zugewandte Seite, des Wasserspeichers wasserdurchlässig ausgebildet sein. An die wasserdurchlässige Oberseite des Wasserspeichers können seitlich Auffangflächen angrenzen, wobei die Auffangflächen insbesondere ein Gefälle in Richtung der Oberseite des Wasserspeichers aufweisen können. Die Auffangflächen können hierbei an die Oberkanten des Wasserspeichers angrenzen, sodass die Auffangflächen die Wasserzuführung des Wasserspeichers ausbilden. Das auf die Auffangflächen gelangende Sickerwasser gelangt über das Gefälle der Auffangflächen in den Speicherkörper. Um das Sickerwasser einer möglichst großen Fläche auffangen zu können, weist der Speicherkörper vorzugsweise zu allen Richtungen angrenzende Auffangflächen auf. Beispielsweise können an den Längsseiten der rechteckigen Grundfläche des Wasserspeichers mehrere parallel zueinander angeordnete Folienbahnen angeordnet sein. Durch die Anordnung mehrerer Folienbahnen ist ein separates und somit mit verhältnismäßig wenig Aufwand verbundenes Einbringen der einzelnen Auffangflächen in das Erdreich ermöglicht.

In einer Weiterbildung der Erfindung weist der Wasserspeicher eine wasserdurchlässige Oberseite auf. Der Wasserspeicher kann im Wesentlichen quaderförmig ausgebildet sein und eine rechteckige Grundfläche aufweisen. Die Oberseite des Wasserspeichers ist wasserdurchlässig ausgebildet. Beispielsweise kann der Wasserspeicher aus gitterartig aufgebauten Rigolenkörpern aufgebaut sein. Die Außenseiten des Wasserspeichers können durch wasserundurchlässige Dichtungsbahnen ausgebildet sein. Die Oberseite des Wasserspeichers ist durch die Gitterstruktur der Rigolenkörper und ein Geotextil wasserdurchlässig ausgebildet. Das auf der zu bewässernden Nutzfläche, oberhalb des Wasserspeichers anfallende und versickernde Regenwasser kann ungehindert über die Oberseite des Wasserspeichers in den Wasserspeicher eindringen und hier zur weiteren Verwendung, also zur Bewässerung, bereitgehalten werden.

In einer Ausführungsform der Erfindung ist der Wasserspeicher unten und seitlich wasserundurchlässig abgedichtet, der Wasserspeicher ist zumindest abschnittsweise durch das Porenvolumen des Erdreiches ausgebildet, der Wasserspeicher weist einen Entnahmebereich für das gespeicherte Wasser auf und der Entnahmebereich ist durch mindestens einen Rigolenkörper ausgebildet. Der unterirdisch angeordnete Wasserspeicher kann zumindest abschnittsweise durch das Porenvolumen des Erdreiches, insbesondere bis auf einen Entnahmebereich zur Entnahme des gespeicherten Wassers vollständig durch das Porenvolumen des Erdreiches, ausgebildet sein. Hierzu kann ein Erdreichvolumen seitlich und nach unten mittels wasserundurchlässigen Begrenzungen, insbesondere durch Folienbahnen, Dichtungsbahnen oder Ähnliches abgedichtet sein. Das aufzunehmende Wasser wird in dem Porenvolumen des Erdreiches gespeichert. Der Entnahmebereich kann durch einen Entnahmekanal ausgebildet sein, wobei der Entnahmebereich durch mindestens einen, vorzugsweise durch mehrere Rigolenkörper ausgebildet sein kann. In dem Entnahmebereich kann eine Pumpe zur Entnahme des gespeicherten Wassers und zur Förderung des gespeicherten Wassers an die Oberfläche der Nutzfläche angeordnet sein.

Ein weiterer Aspekt der Erfindung betrifft eine Bewässerungsvorrichtung für Freiflächen mit einer erfindungsgemäßen Wasserspeichervorrichtung, wobei der Wasserspeicher und die Wasserauffangvorrichtungen zumindest abschnittsweise unterhalb der betreffenden Nutzfläche angeordnet sind und wobei dem Wasserspeicher eine Wasserpumpe zur Förderung des gespeicherten Wassers zu einer Beregnungsanlage zugeordnet ist. Eine Bewässerungsvorrichtung zum Bewässern einer Nutzfläche, insbesondere einer landwirtschaftlichen Nutzfläche, weist eine Wasserspeichervorrichtung mit einem Wasserspeicher und Wasserauffangflächen auf. Der Wasserspeicher und die Auffangflächen sind unterirdisch, unterhalb der zu bewässernden Nutzfläche angeordnet. Insbesondere kann der Wasserspeicher eine quaderförmige Form mit einer rechteckigen Grundfläche aufweisen. Insbesondere die Oberseite des Wasserspeichers kann hierbei wasserdurchlässig ausgebildet sein. An den Seitenkanten des Wasserspeichers können Auffangflächen angeordnet sein, so dass von den Auffangflächen aufgenommenes Regenwasser in den Wasserspeicher eingeleitet werden kann. Bei den Auffangflächen handelt es sich um in das Erdreich eingebrachte Folienbahnen.

Die Auffangflächen können ein Gefälle in Richtung des Wasserspeichers aufweisen, so dass auf der Nutzfläche niedergegangenes und versickertes Regenwasser aufgefangen und dem Wasserspeicher zugeführt werden kann. Insbesondere können die Auffangflächen an den Oberkanten des Wasserspeichers angrenzen, sodass eine direkte Überführung des aufgefangenen Niederschlagswassers in den Wasserspeicher ermöglicht ist.

Ein weiterer Aspekt der Erfindung betrifft ein Verfahren zur Bewässerung einer Nutzfläche mit einer Bewässerungsanlage, wobei die Bewässerungsanlage mindestens einen Wasserspeicher und mindestens eine Wasserzuführung aufweist, wobei das zur Bewässerung vorgesehene Wasser unterirdisch gespeichert wird, wobei das Wasser durch mindestens eine unterirdische Wasserauffangvorrichtung dem Wasserspeicher zugeführt wird, wobei die Wasserauffangvorrichtung durch mindestens eine Auffangfläche ausgebildet ist, wobei die Auffangfläche durch eine wasserdichte Folienbahn ausgebildet ist, wobei das Wasser über die Auffangfläche dem Wasserspeicher zugeführt wird, wobei das Wasser unterirdisch dem Wasserspeicher entnommen wird und wobei das entnommene Wasser der Nutzfläche zur Bewässerung zugeführt wird, wobei erfindungswesentlich vorgesehen ist, dass die Auffangfläche mindestens eine Drainageableitung aufweist, die durch Drainageplatten ausgebildet ist, die oberhalb der wasserdichten Folienbahn angeordnet sind und dass das Wasser über die Folienbahn und über die oberhalb der Folienbahn angeordnete Drainageplatten dem Wasserspeicher zugeführt wird. Bei Nutzflächen kann es sich beispielsweise um landwirtschaftlich genutzte Flächen, um Sportanlagen, um Gemüseanbauflächen, um Gewächshäuser oder Ähnliches handeln. Das auf einer Nutzfläche versickernde Wasser, insbesondere Niederschlagswasser, wird durch unterirdisch angeordnete Wasserauffangvorrichtungen, also durch die Wasserauffangflächen, dem unterirdisch angeordneten Wasserspeicher zugeführt. Bei den Wasserauffangvorrichtungen handelt es sich um Folienbahnen, die dem Wasserspeicher zugeordnet sind. Oberhalb der Folienbahnen sind Drainagen, als eventuell auch als Drainagerohre, angeordnet, so dass eine besonders rasche Zuführung des anfallenden Niederschlagswassers zu dem Wasserspeicher ermöglicht ist. Die Folienbahnen bilden einen wasserundurchlässigen unteren Abschluss unterhalb der Drainagen zur Ausbildung der Wasserauffangvorrichtungen. Die Wasserauffangvorrichtungen können so großflächig unterhalb der Nutzfläche angeordnet sein, dass ein Großteil des auf der Nutzfläche versickernden Wassers dem Wasserspeicher zugeführt werden kann. Zur Bewässerung wird das in dem Wasserspeicher gespeicherte Wasser, beispielsweise mittels mindestens einer Pumpe, entnommen und der Nutzfläche zur Bewässerung, beispielsweise mittels einer Beregnungsanlage, zugeführt. Somit ist eine Speicherung des in regenreichen Zeitperioden anfallenden Wassers möglich, so dass das gespeicherte Wasser in regenarmen Zeitperioden zur Bewässerung zur Verfügung steht, ohne auf Grundwasser oder ähnliche Wasserquellen zurückgreifen zu müssen.

In einer Weiterbildung des Verfahrens wird in niederschlagsreichen Zeitperioden, insbesondere im Winter, Wasser, insbesondere Sickerwasser oder Drainagewasser, in dem Wasserspeicher aufgenommen und das gespeicherte Wasser wird in niederschlagsarmen Zeitperioden zur Bewässerung genutzt. In niederschlagsreichen Zeitperioden, wie beispielsweise den Wintermonaten, kann auf der Nutzfläche anfallendes Niederschlagswasser durch die Wasserauffangvorrichtungen dem Wasserspeicher zur Speicherung zugeführt werden. Das gespeicherte Wasser kann entsprechend in niederschlagsarmen Zeitperioden, beispielsweise in den Sommermonaten, zur Bewässerung der Nutzfläche eingesetzt werden. Auf die Nutzung von Grundwasser oder ähnliche Wasserquellen zur Bewässerung der Nutzfläche in niederschlagsarmen Zeitperioden kann somit verzichtet werden, sodass eine wassereffiziente Bewässerung der Nutzfläche ermöglicht ist.

In einer Weiterbildung des Verfahrens handelt es sich bei der Nutzfläche um eine großflächige Nutzfläche. Das erfindungsgemäße Verfahren zur Bewässerung kann insbesondere bei großflächigen Nutzflächen, beispielsweise landwirtschaftlichen Nutzflächen oder auch für große Sportanlagen wie Sportplätze, beispielsweise Fußballplätze, Golfplätze oder Reitplätze oder für Gemüseanbauflächen oder Gewächshäuser, genutzt werden. Dieses Verfahren ist insbesondere bei großen Flächen vorteilhaft, da auf den Transport von Bewässerungswasser zu den Nutzflächen und die Nutzung von Grundwasser und/oder Trinkwasser verzichtet werden kann.

Ein Ausführungsbeispiel einer erfindungsgemäßen Bewässerungsvorrichtung ist in der Zeichnung dargestellt. Es zeigen:
- Fig. 1:: eine Seitenansicht der erfindungsgemäßen Bewässerungsvorrichtung in schematischer Form;
- Fig. 2:: eine Draufsicht auf die Bewässerungsvorrichtung gemäß Fig. 1; und
- Fig. 3:: eine weitere Seitenansicht der Bewässerungsvorrichtung gemäß Fig. 1 und 2.

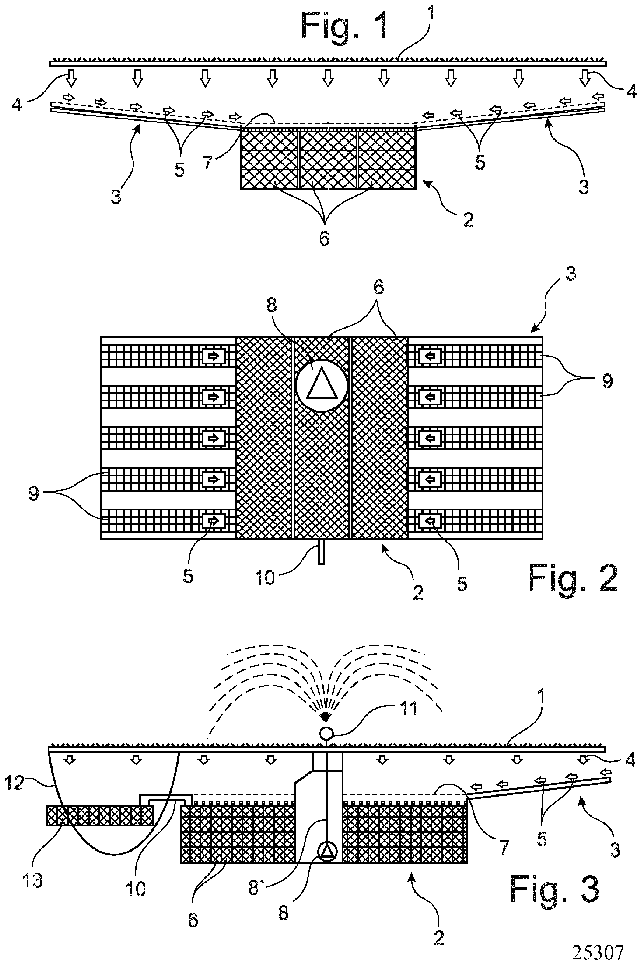

Die Bewässerungsvorrichtung in Figur 1 ist unterhalb einer Erdoberfläche 1 angeordnet. Sie weist einen Wasserspeicher 2 sowie Wasserauffangvorrichtungen 3 auf. Figur 1 zeigt dabei eine Situation beispielsweise im Winter in Mitteleuropa, in dem häufige Niederschläge auf die Erdoberfläche 1 auftreffen. Wasser aus diesen Niederschlägen versickert entlang der Pfeile 4. Es trifft auf die Wasserauffangvorrichtungen 3 und wird entlang Pfeilen 5 über ein in der Wasserauffangvorrichtung 3 eingerichtetes Gefälle in den Wasserspeicher 2 geleitet. Figur 1 zeigt dabei noch, dass der Wasserspeicher 2 aus einzelnen Rigolenkörpern 6 ausgebildet ist, die mit einem Filterflies 7 an der Oberseite des Wasserspeichers 2 wasserdurchlässig abgedeckt sind. Der Boden und die Seitenwände des Wasserspeichers 2 sind dagegen wasserundurchlässig ausgebildet.

Figur 2 zeigt, dass dem Wasserspeicher 2 mit seinen Rigolenkörpern 6 eine Pumpe 8 zugeordnet ist. Mit dieser kann Wasser aus dem Wasserspeicher 2 herausgefördert werden. Figur 2 zeigt weiterhin, dass die Wasserauffangvorrichtungen 3 durch wasserdichte Folienbahnen 9 ausgebildet sind. Über die Folienbahnen 9 zugeführtes Wasser kann aus dem Wasserspeicher 2 mit Hilfe der Pumpe 8 oder auch über einen Überlauf 10 abgeführt werden.

Figur 3 zeigt dann einen Sommerfall. Verkürzte Pfeile 4 zeigen an, dass in dieser Jahreszeit weniger Wasser versickert. In diesem Fall kann aus dem Wasserspeicher 2 mit Hilfe der Pumpe 8 über eine Leitung 8' Wasser entnommen werden und über eine Beregnungsanlage 11 auf der Erdoberfläche 1 verteilt werden.

Figur 3 zeigt noch, dass bei einem hohen Füllstand des Wasserspeichers 2 Wasser über den Überlauf 10 in einen Graben 12 und/oder in eine Versickerungseinrichtung 13 fließen kann.

## Patentansprüche

1. Wasserspeichervorrichtung für eine Bewässerungsanlage von Nutzflächen, insbesondere von landwirtschaftlich genutzten Nutzflächen, mit mindestens einem Wasserspeicher (2) und mit mindestens einer Wasserzuführung, wobei der Wasserspeicher (2) im eingebauten Zustand unterirdisch angeordnet ist, wobei die Wasserzuführung durch mindestens eine Wasserauffangvorrichtung (3) ausgebildet ist, wobei die Wasserauffangvorrichtung (3) im eingebauten Zustand unterirdisch angeordnet ist und zumindest abschnittsweise unterhalb der Nutzfläche angeordnet ist, wobei die Wasserauffangvorrichtung (3) durch mindestens eine Auffangfläche ausgebildet ist, wobei die Auffangfläche durch eine wasserdichte Folienbahn (9) ausgebildet ist und wobei die Auffangfläche mindestens eine Drainageableitung aufweist,
**dadurch gekennzeichnet,**
**dass** die Drainageableitung durch Drainageplatten ausgebildet ist, wobei die Drainageplatten oberhalb der wasserdichten Folienbahn angeordnet sind.

2. Wasserspeichervorrichtung nach Anspruch 1, **dadurch gekennzeichnet, dass** die Wasserauffangvorrichtung (3) ferner mindestens ein Drainagerohr aufweist.

3. Wasserspeichervorrichtung nach einem der Ansprüche 1 oder 2, **dadurch gekennzeichnet, dass** die Wasserauffangvorrichtung (3) ein Gefälle in Richtung des Wasserspeichers (2) aufweist.

4. Wasserspeichervorrichtung nach einem der Ansprüche 1 bis 3, **dadurch gekennzeichnet, dass** der Wasserspeicher (2) wasserundurchlässige Seitenwände und einen wasserundurchlässigen Boden aufweist.

5. Wasserspeichervorrichtung nach einem der Ansprüche 1 bis 4, **dadurch gekennzeichnet, dass** der Wasserspeicher (2) aus Rigolenkörpern (6) aufgebaut ist.

6. Wasserspeichervorrichtung nach einem der Ansprüche 1 bis 5, **dadurch gekennzeichnet, dass** die Auffangfläche zu mindestens einer Seite an den Wasserspeicher (2) anschließt.

7. Wasserspeichervorrichtung nach einem der Ansprüche 1 bis 6, **dadurch gekennzeichnet, dass** der Wasserspeicher (2) eine wasserdurchlässige Oberseite aufweist.

8. Wasserspeichervorrichtung nach einem der Ansprüche 1 bis 7, **dadurch gekennzeichnet, dass** der Wasserspeicher (2) unten und seitlich wasserundurchlässig abgedichtet ist, dass der im eingebauten Zustand unterirdisch angeordnete Wasserspeicher (2) zumindest abschnittsweise durch das Porenvolumen des Erdreiches ausgebildet sein kann, dass der Wasserspeicher (2) einen Entnahmebereich für das gespeicherte Wasser aufweist und dass der Entnahmebereich durch mindestens einen Rigolenkörper (6) ausgebildet ist.

9. Bewässerungsvorrichtung für Freiflächen mit einer Wasserspeichervorrichtung nach einem der vorhergehenden Ansprüche, wobei der Wasserspeicher (2) und die Wasserauffangvorrichtung (3) zumindest abschnittsweise unterhalb der betreffenden Nutzfläche angeordnet ist und wobei dem Wasserspeicher (2) eine Wasserpumpe (8) zur Förderung des gespeicherten Wassers zu einer Beregnungsanlage (11) zugeordnet ist.

10. Verfahren zur Bewässerung einer Nutzfläche mit einer Bewässerungsanlage, wobei die Bewässerungsanlage mindestens einen Wasserspeicher (2) und mindestens eine Wasserzuführung aufweist, wobei das zur Bewässerung vorgesehene Wasser unterirdisch in mindestens einem Wasserspeicher (2) gespeichert wird, wobei das Wasser durch mindestens eine unterirdisch unterhalb der Nutzfläche angeordnete Wasserauffangvorrichtung (3) dem Wasserspeicher (2) zugeführt wird, wobei die Wasserauffangvorrichtung (3) durch mindestens eine Auffangfläche ausgebildet ist, wobei die Auffangfläche durch eine wasserdichte Folienbahn (9) ausgebildet ist, wobei das Wasser über die Auffangfläche dem Wasserspeicher (2) zugeführt wird, wobei das Wasser dem Wasserspeicher (2) entnommen wird und wobei das entnommene Wasser der Nutzfläche zur Bewässerung zugeführt wird,
**dadurch gekennzeichnet,**
**dass** die Auffangfläche mindestens eine Drainageableitung aufweist, die durch Drainageplatten ausgebildet ist, die oberhalb der wasserdichten Folienbahn (9) angeordnet sind und dass das Wasser über die Folienbahn und über die oberhalb der Folienbahn angeordnete Drainageplatten dem Wasserspeicher (2) zugeführt wird.

11. Verfahren zur Bewässerung einer Nutzfläche nach Anspruch 10, **dadurch gekennzeichnet, dass** in niederschlagsreichen Zeitperioden, insbesondere im Winter, Wasser, insbesondere Sickerwasser und Drainagewasser, in dem Wasserspeicher (2) aufgenommen wird und dass das gespeicherte Wasser in niederschlagsarmen Zeitperioden zur Bewässerung genutzt wird.

12. Verfahren zur Bewässerung einer Nutzfläche nach einem der Ansprüche 10 oder 11, **dadurch gekennzeichnet, dass** es sich bei der Nutzfläche um eine großflächige Nutzfläche handelt.

## Claims

1. A water storage device for an irrigation system for useful areas, in particular of useful agricultural areas, comprising at least one water reservoir (2) and at least one water supply system, wherein in the installed state, the water reservoir (2) is arranged underground, wherein the water supply system is formed by at least one water collecting device (3), wherein in the installed state, the water collecting device (3) is arranged underground and is arranged at least in sections below the useful area, wherein the water collecting device (3) is formed by at least one collecting area, wherein the collecting area is formed by a waterproof foil sheet (9), and wherein the collecting area has at least one drainage outlet,
**characterized in**
**in that** the drainage outlet is formed by drainage plates, wherein the drainage plates are arranged above the waterproof foil sheet.

2. The water storage device according to claim 1, **characterized in that** the water collecting device (3) further includes at least one drainage pipe.

3. The water storage device according to any one of claims 1 or 2, **characterized in that** the water collecting device (3) has a slope in the direction of the water reservoir (2).

4. The water storage device according to any one of claims 1 to 3, **characterized in that** the water reservoir (2) has water-impermeable side walls and a water-impermeable bottom.

5. The water storage device according to any one of claims 1 to 4, **characterized in that** the water reservoir (2) is composed of infiltration bodies (6).

6. The water storage device according to any one of claims 1 to 5, **characterized in that** the collecting area is connected to the water reservoir (2) at least on one side.

7. The water storage device according to any one of claims 1 to 6, **characterized in that** the water reservoir (2) has a water-permeable upper side.

8. The water storage device according to any one of claims 1 to 7, **characterized in that** the water reservoir (2) is sealed at the bottom and laterally in a water-impermeable manner, **in that** the water reservoir (2), which is arranged underground in the installed state, can be formed at least in sections by the pore volume of the soil, **in that** the water reservoir (2) has a withdrawal region for the stored water, and **in that** the withdrawal region is formed by at least one infiltration body (6).

9. An irrigation device for open spaces, comprising a water storage device according to any one of the preceding claims, wherein the water reservoir (2) and the water collecting device (3) are arranged at least in sections below the respective useful area and wherein a water pump (8) is associated with the water reservoir (2) for pumping the stored water to a sprinkler system (11).

10. A method for irrigating a useful area using an irrigation system, wherein the irrigation system includes at least one water reservoir (2) and at least one water supply system, wherein the water provided for irrigation is stored underground in at least one water reservoir (2), wherein the water is supplied to the water reservoir (2) by at least one water collecting device (3) arranged underground below the useful area, wherein the water collecting device (3) is formed by at least one collecting area, wherein the collecting area is formed by a waterproof foil sheet (9), wherein the water is supplied to the water reservoir (2) via the collecting area, wherein the water is removed from the water reservoir (2), and wherein the removed water is supplied to the useful area for irrigation,
**characterized in**
**that** the collecting area includes at least one drainage outlet which is formed by drainage plates which are arranged above the waterproof foil sheet (9), and in that the water is supplied to the water reservoir (2) via the drainage plates arranged above the foil sheet.

11. The method for irrigating a useful area according to claim 10, **characterized in that** water, in particular seepage water and drainage water, is collected in the water reservoir (2) during periods with high precipitation, in particular in winter, and **in that** the stored water is used for irrigation during periods with low precipitation.

12. The method for irrigating a useful area according to any one of claims 10 or 11, **characterized in that** the useful area is a large-scale useful area.

## Revendications

1. Dispositif d'accumulation d'eau pour une installation d'irrigation de surfaces utiles, en particulier de surfaces utiles utilisées pour l'agriculture, avec au moins un réservoir d'eau (2) et avec au moins une arrivée d'eau, sachant que le réservoir d'eau (2) est disposé sous terre à l'état monté , sachant que l'arrivée d'eau est constituée par au moins un dispositif de collecte de récupération d'eau (3), sachant que le dispositif de récupération d'eau (3) est disposé sous terre à l'état monté et est disposé au moins en partie en dessous de la surface utile,
sachant que le dispositif de récupération d'eau (3) est constitué par au moins une surface de récupération, sachant que la surface de récupération est constituée par une bande de film étanche à l'eau (9) et sachant que la surface de récupération comporte au moins une dérivation de drainage, **caractérisé en ce que**
la dérivation de drainage est constituée par des plaques de drainage, sachant que les plaques de drainage sont disposées au-dessus de la bande de film étanche à l'eau.

2. Dispositif d'accumulation d'eau selon la revendication 1, **caractérisé en ce que** le dispositif de récupération d'eau (3) comporte en plus au moins un tuyau de drainage.

3. Dispositif d'accumulation d'eau selon l'une quelconque des revendications 1 ou 2, **caractérisé en ce que** le dispositif de récupération d'eau (3) comporte une déclivité en direction du réservoir d'eau (2).

4. Dispositif d'accumulation d'eau selon l'une quelconque des revendications 1 à 3, **caractérisé en ce que** le réservoir d'eau (2) comporte des parois latérales imperméables à l'eau et un fond imperméable à l'eau.

5. Dispositif d'accumulation d'eau selon l'une quelconque des revendications 1 à 4, **caractérisé en ce que** le réservoir d'eau (2) est constitué de corps à rigoles (6) .

6. Dispositif d'accumulation d'eau selon l'une quelconque des revendications 1 à 5, **caractérisé en ce que** la surface de récupération se raccorde sur au moins un côté au réservoir d'eau (2).

7. Dispositif d'accumulation d'eau selon l'une quelconque des revendications 1 à 6, **caractérisé en ce que** le réservoir d'eau (2) comporte une face supérieure perméable à l'eau.

8. Dispositif d'accumulation d'eau selon l'une quelconque des revendications 1 à 7, **caractérisé en ce que** le réservoir d'eau (2) est étanchéifié en dessous et latéralement de façon imperméable à l'eau, **en ce que** le réservoir d'eau (2) disposé sous terre à l'état monté peut être constitué au moins en partie par le volume de pores du terrain, **en ce que** le réservoir d'eau (2) comporte une zone de prélèvement pour l'eau accumulée et **en ce que** la zone de prélèvement est constituée par au moins un corps à rigoles (6).

9. Dispositif d'irrigation pour surfaces libres avec un dispositif d'accumulation d'eau selon l'une quelconque des revendications précédentes, sachant que le réservoir d'eau (2) et le dispositif de récupération d'eau (3) sont disposés au moins en partie en-dessous de la surface utile concernée et sachant qu'une pompe à eau (8) est attribuée au réservoir d'eau (2) pour transporter l'eau accumulée vers une installation d'arrosage (11).

10. Procédé d'irrigation d'une surface utile avec une installation d'irrigation, sachant que l'installation d'irrigation comporte au moins un réservoir d'eau (2) et au moins une arrivée d'eau, sachant que l'eau prévue pour l'irrigation est accumulée sous terre dans au moins un réservoir d'eau (2), sachant que l'eau est acheminée au réservoir d'eau (2) par au moins un dispositif de récupération d'eau (3) disposé sous terre en dessous de la surface utile, sachant que le dispositif de récupération d'eau (3) est constitué par au moins une surface de récupération, sachant que la surface de récupération est constituée par une bande de film étanche à l'eau (9), sachant que l'eau est acheminée au réservoir d'eau (2) par le biais de la surface de récupération, sachant que l'eau est prélevée du réservoir d'eau (2) et sachant que l'eau prélevée est acheminée à la surface utile pour irrigation,
**caractérisé en ce que**
la surface de récupération comporte au moins une dérivation de drainage, qui est constituée par des plaques de drainage, qui sont disposées au-dessus de la bande de film étanche à l'eau (9) et **en ce que** l'eau est acheminée au réservoir d'eau (2) par le biais de la bande de film et des plaques de drainage disposées au-dessus de la bande de film.

11. Procédé d'irrigation d'une surface utile selon la revendication 10, **caractérisé en ce que** dans les périodes de temps à fortes précipitations, en particulier l'hiver, l'eau, en particulier l'eau d'infiltration et l'eau de drainage, est recueillie dans le réservoir d'eau (2) et **en ce que** l'eau accumulée est utilisée pour l'irrigation dans les périodes de temps à faibles précipitations.

12. Procédé d'irrigation d'une surface utile selon l'une quelconque des revendications 10 ou 11, **caractérisé en ce que** concernant la surface utile, il s'agit d'une surface utile de grande surface.
